(19) Europäisches Patentamt

European Patent Office

Office européen des brevets

(11) **EP 0 868 938 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.⁷: **B01D 53/32**, B01D 53/92, B01D 53/94

(21) Anmeldenummer: **98102576.0**

(22) Anmeldetag: **14.02.1998**

(54) **Verfahren zur NO-Entfernung aus motorischen Abgasen**

Process for eliminating of NO from engine exhaust gases

Procédé pour éliminer du NO du gaz d'échappement de moteur

(84) Benannte Vertragsstaaten:
**DE ES FR GB IT SE**

(30) Priorität: **02.04.1997 DE 19713633**

(43) Veröffentlichungstag der Anmeldung:
**07.10.1998 Patentblatt 1998/41**

(73) Patentinhaber: **DaimlerChrysler AG**
**70567 Stuttgart (DE)**

(72) Erfinder:
- **Plog, Carsten, Dr.rer.nat.**
**88677 Markdorf (DE)**
- **Andorf, Renato, Dr.rer.nat.**
**88074 Meckenbeuren (DE)**
- **Müller, Ralf**
**88336 Aulendorf (DE)**
- **Schaefer, Wolfgang, Dr.rer.nat.**
**88048 Friedrichshafen (DE)**
- **Kayser, Armin**
**88709 Meersburg (DE)**

(56) Entgegenhaltungen:
EP-A- 0 566 071      DE-A- 3 644 090
DE-C- 19 527 693     US-A- 3 676 220
US-A- 3 950 944      US-A- 5 409 591

**Beschreibung**

Die Erfindung betrifft ein Verfahren zur Entfernung von NO aus dem Abgas von Verbrennungsmotoren, insbesondere zur Anwendung in einem Kraftfahrzeug.

Die zunehmend strenger werdende Abgasgesetzgebung erfordert die Entwicklung immer leistungsfähigerer Abgasnachbehandlungssysteme für Kraftfahrzeuge. Zur Erfüllung zukünftiger Grenzwerte beschreitet man bei der Entstickung magermotorischer Abgase mehrere Entwicklungsrichtungen:

- **DENOX-Katalyse**

 Die Stickoxide werden unter Einsatz eines Reduktionsmittels, Ammoniak oder ein Kohlenwasserstoff, an einem geeigneten Katalysator zu Stickstoff und Wasser und bei Einsatz eines Kohlenwasserstoffs zusätzlich zu Kohlendioxid umgesetzt.

 Bislang entwickelte DENOX-Katalysatoren verfügen über eine noch zu geringe Aktivität und Selektivität. Weiterhin ist größtenteils die Langzeitstabilität im Abgas begrenzt.

- **$NO_X$-Speicher-Katalysatoren**

 Der Katalysator besteht aus zwei Komponenten, einem $NO_X$-speichernden Material und einem Dreiwegekatalysator. Die Stickoxide werden im Magerbetrieb des Motors in der Speicherkomponente als Nitrat chemisch gebunden und in einer Regenerationsphase unter stöchiometrisch oder fetten Motorbetriebsphasen freigesetzt und am Dreiwegekatalysator zu Stickstoff umgesetzt.

 Die noch zu geringe Resistenz des $NO_X$-speichernden Materials gegen $SO_X$ sowie dessen begrenzte thermische Stabilität verhindern derzeit den Serieneinsatz dieses Katalysatortyps.

- **SNR-Verfahren (selektive $NO_X$-Rückführung)**

 Die Stickoxide werden an einem geeigneten Material im Abgas gespeichert und nach vollständiger Beladung des $NO_X$-Speichers über eine entsprechende Klappenschaltung in der Abgasführung über die Ansaugluft in den Motorbrennraum rückgeführt, wo die Reduktion des NO bei der Verbrennung stattfindet.

 Eine noch unzureichende Beladungskapazität des $NO_X$-Speichers, sowie dessen begrenzte Lebensdauer im Abgas verhindern bislang den Serieneinsatz des SNR-Verfahrens.

Alle aufgeführten Verfahren befinden sich derzeit noch im Entwicklungsstadium und sind nicht im Serienfahrzeug einsetzbar.

Die Druckschrift US 5,409,591 beschreibt ein Verfahren zur sensorischen Bestimmung des NO-Gehalts in Abgasen eines Verbrennungsmotors. In diesem Verfahren wird NO zur Erzeugung eines Detektorsignals aus dem Abgas entnommen und über einen Festkörperelektrolyten transportiert.

Die Druckschrift DE 195 27 693 offenbart ein Verfahren zur NO-Reduzierung in Abgasen von Verbrennungsmaschinen, in dem NO auf einer Kathode katalytisch zu $N_2$ und $O^{2-}$ reduziert wird, und die $O^{2-}$ - Ionen anschließend durch einen $O^{2-}$ - leitenden Festkörperelektrolyten zu einer Anode weitergeleitet werden. Dort werden sie entladen und als $O_2$ - Moleküle abgegeben.

Die Druckschriften DE 36 44 090 und EP 0.566.071 offenbaren ein Verfahren zur Reduktion von $NO_X$ - haltigen Abgasen aus Verbrennungsmotoren, indem das $NO_X$ mit $N_2$ katalytisch reduziert wird. Der Wasserstoff wird durch Elektrolyse mittels eines Festkörperetektrolyten oder einer $H^+$ - leitenden Membran aus dem im Abgas enthaltenen Wasserdampf gebildet.

Die Druckschrift US 3,950,944 zeit eine Anordnung, in der $O_2$ elektrolytisch aus dem Abgas eines Verbrennungmotors abgeschieden wird. Anschließend wird das Abgas zu einem Dreiwegekatalysator geleitet und der gebildete Sauerstoff wird über die Ansaugluft in den Motorbrennraum geführt und dort umgesetzt.

Der Erfindung liegt die Aufgabe zugrunde, ein Verfahren zur NO-Entfernung aus motorischen Abgasen zu schaffen, mit dem die bei den bekannten Verfahren bestehenden Nachteile, insbesondere hinsichlich Aktivität, Selektivität und Langzeitbeständigkeit überwunden werden.

Diese Aufgabe wird mit dem Verfahren nach Anspruch 1 gelöst. Vorteilhafte Ausführungen der Erfindung sind Gegenstand weiterer Ansprüche.

Gemäß der Erfindung wird ein $NO^+$-leitender elektrochemischer Festelektrolyt der zwischen zwei Elektroden angeordnet ist, eingesetzt, der bei Anlegen einer elektrischen Spannung dem Abgas NO entzieht und in eine Anreicherungszelle transportiert. Dabei wird NO auf der Abgasseite anodisch zu $NO^+$ oxidiert und als solches durch den Festelektrolyt transportiert. An der Kathode werden dann die Stickoxidkationen zu NO reduziert.

Als Festelektrolyt dient generell ein kationleitender Feststoff. Als Ausführungsbeispiel sei $NO^+$- oder $Ag^+$-ausgetauschtes beta-Aluminiumoxid genannt.

Das erfindungsgemäße Verfahren kann zur Erfüllung zukünftiger Grenzwerte zur Entstickung motorischer Abgase in Kraftfahrzeugen eingesetzt werden. Es kann insbesondere zur Entfernung von Stickoxiden im Abgas mager betriebener oder $\lambda$=1-betriebener oder magermix-betriebener Kraftfahrzeuge eingesetzt werden.

Mit dem auf der Kathodenseite angereicherten Stickoxiden kann in einem nächsten Schritt unterschiedlich verfahren werden:

- **Fall A**

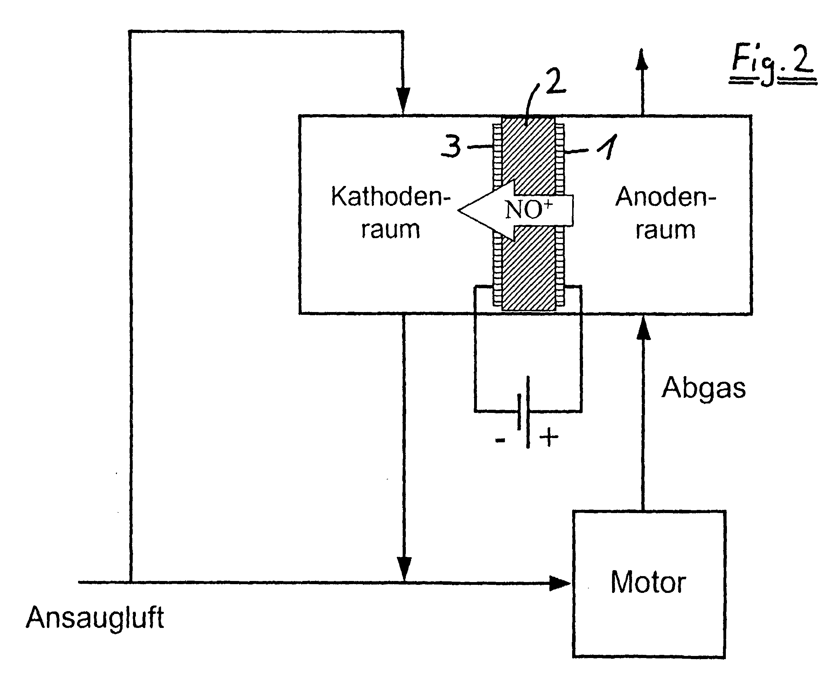

 Rückführung des NO über die Ansaugluft in den Motorbrennraum (nach SNR-Prinzip) (Fig. 2).

**- Fall B**

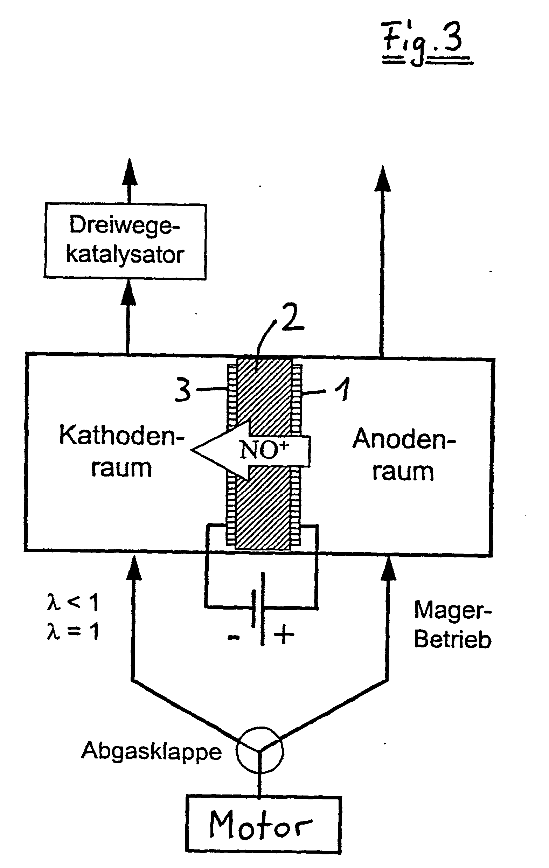

Umsetzung des NO unter stöchiometrisch/fetten Abgasbedingungen bei magermixbetriebenen Ottomotoren (Direkteinspritzung oder Saugrohreinspritzung) (Fig. 3).

**- Fall C**

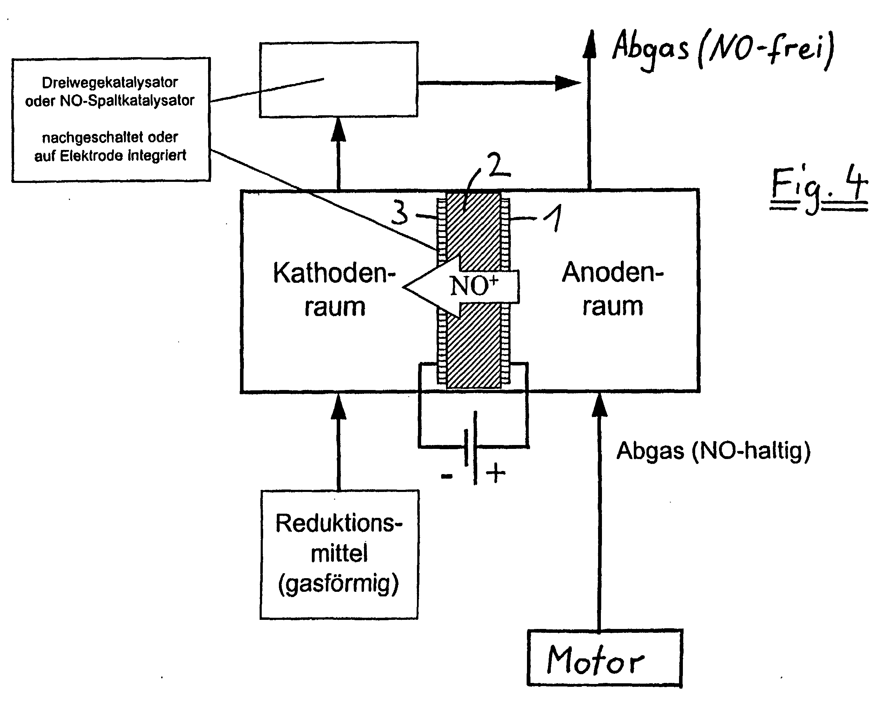

Umsetzung des NO mit gasförmigen Reduktionsmitteln (z.B Kohlenwasserstoff, CO, H2), der an Bord des Kraftfahrzeugs erzeugt oder mitgeführt wird (Fig. 4).

**- Fall D**

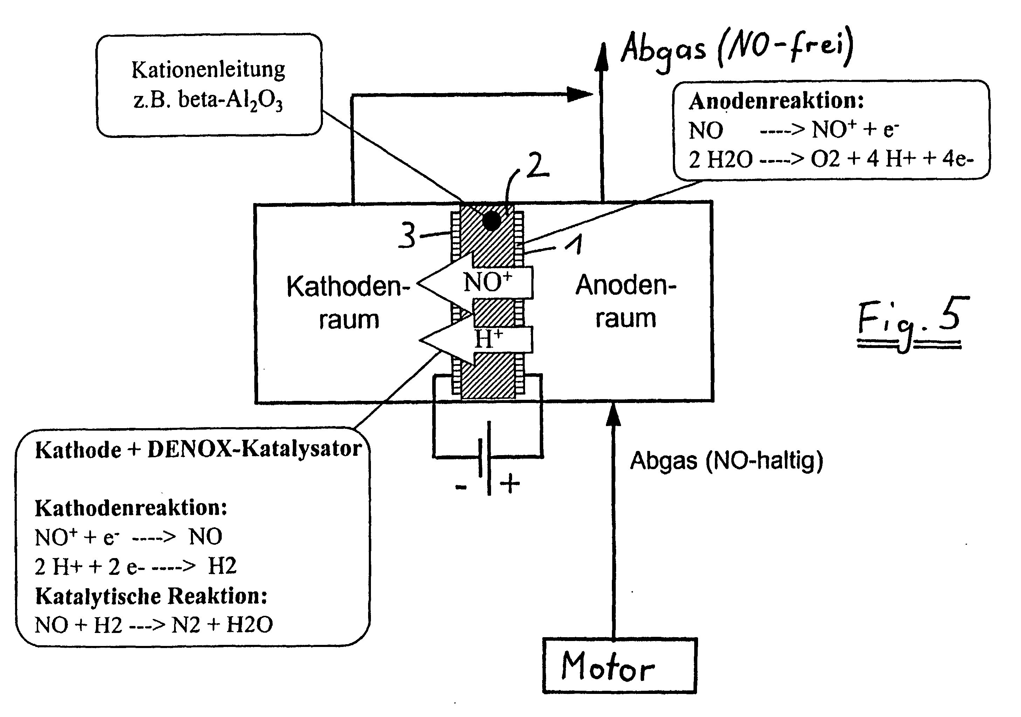

katalytische Reduktion des NO mit $H_2$, der als $H^+$ (aus abgasseitigem Wasser) ebenfalls durch den Festelektrolyt oder durch eine zusätzliche $H^+$-leitende Membran (z.B. PEM Proton Exchange Membran) transportiert wird (Fig. 5).

**- Fall E**

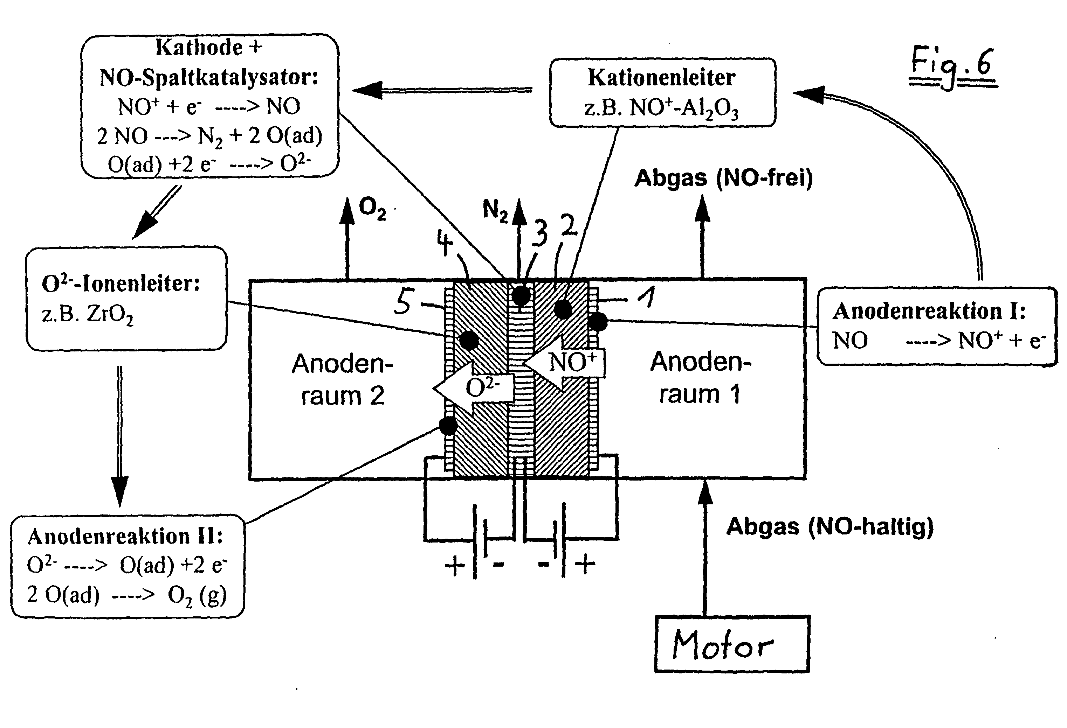

Spaltung des NO auf der Kathodenseite an geeignetem Katalysator unter Freisetzung des $N_2$ (gasförmig) und Weiterleitung des Spaltsauerstoffs mittels eines an sich bekannten $O^{2-}$-Ionenleiters (Fig. 6).

Die Erfindung wird anhand von Fig. näher erläutert. Es zeigen:

Fig. 1      eine Prinzipskizze zum Ablauf des erfindungsgemäßen Verfahrens;

Fig. 2 bis 6      Verfahrensvarianten entsprechend der erwähnten Fälle A bis E,

Fig. 7      einen Versuchsaufbau zur Durchführung des erfindungsgemäßen Verfahrens,

Fig. 8      den Verlauf von Spannung U (links, in Volt) und Stromstärke I (rechts, in mA) über der Zeit (in Minuten), gemessen an einem Versuchsaufbau nach Fig. 7.

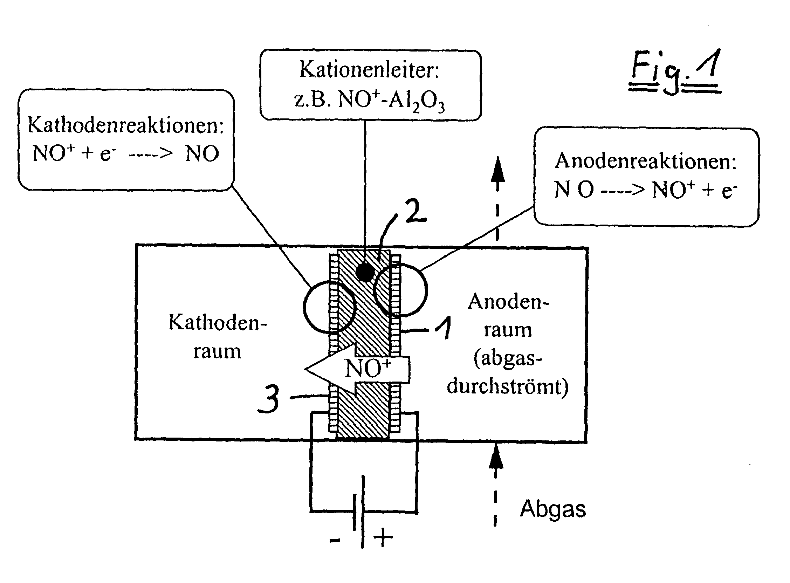

Fig. 1 zeigt das Funktionsprinzip des erfindungsgemäßen Verfahrens. Man erkennt die beiden Elektroden (Anode 1, Kathode 3), zwischen denen mittels einer externen Spannungsquelle eine bestimmte Spannungsdifferenz aufrechterhalten wird, sowie den kationenleitenden Festelektrolyten 2 zwischen den beiden Elektroden 1,3. Als Festelektrolyt 2 wird z.B. ein $NO^+$-ausgetauschtes beta-Aluminiumoxid eingesetzt. Das Abgas des Verbrennungsmotors durchströmt den Anodenraum. An der Anode 1 wird das NO gemäß der Reaktion

$$NO \longrightarrow NO^+ + e^-$$

zu $NO^+$ oxidiert. Die $NO^+$-Ionen werden durch den Festelektrolyten 2 transportiert und an der Kathode 3 gemäß der Reaktion

$$NO^+ + e^- \longrightarrow NO$$

zu NO reduziert. Wie mit dem so auf der Kathodenseite angereicherten Stickoxiden verfahren werden kann (Verfahrensvarianten A bis E), ist in den Fig. 2 bis 6 im einzelnen dargestellt.

Fig. 2 zeigt eine erste Verfahrensvariante (Fall A), bei dem das an der Kathodenseite vorliegende NO über die Ansaugluft in den Motorbrennraum zurückgeführt wird. Im Motorbrennraum erfolgt dann analog zum oben erwähnten SNR-Verfahren die Reduktion des NO während der Verbrennung.

Dieses Verfahren hat die folgenden Vorteile: Bei dem derzeit in der Entwicklung befindlichen SNR-Verfahren ist bislang kein NO-speicherndes Material mit hinreichend hoher Langzeitstabilität im Abgas bekannt. Das beschriebene Verfahren kann die NO-Anreicherung mittels NO-Adsorbens vollständig ersetzen. Ein weiterer Vorteil liegt im kontinuierlichen Betrieb des Verfahrens. Das auf NO-Adsorption basierte SNR-Verfahren muß auf Grund der Adsorptions- und Desorptionsphase zyklisch betrieben werden.

Fig. 3 zeigt den Fall B, bei dem das an der Kathodenseite vorliegenden NO unter stöchiometrischen oder fetten Abgasbedingungen bei magermixbetriebenen Ottomotoren (Direkteinspritzung oder Saugrohreinspritzung) umgesetzt wird. Dabei wird der Abgasfluß über eine Abgasklappe gesteuert. Bei magerbetriebenem Motor werden die Motorabgase in den Anodenraum geleitet, wo das NO erfindungsgemäß zu $NO^+$ oxidiert wird. Bei stöchiometrischem ($\lambda=1$) oder fettem ($\lambda<1$)Betrieb wird das Abgas durch den mit NO angereicherten Kathodenraum und weiter an einen an sich bekannten Dreiwegekatalysator geführt.

Vorteile: Für die Anwendung in magermixbetriebenen Ottomotoren befinden sich $NO_X$-Speicher-Katalysatoren in der Entwicklung. Auf Grund der geringen Resistenz gegen $SO_X$ und hohe Temperaturen stellt dabei das $NO_X$-speichernde Material (Nitrat-Speicher) ein besonderes Problem dar. Durch das beschriebene Verfahren kann auf diese Komponente vollständig verzichtet werden.

Fig. 4 zeigt eine Ausführung, bei der das kathodenseitig vorliegende NO unter Einsatz eines Reduktionsmittels an einem Katalysator umgesetzt wird (Fall C). Das gasförmige Reduktionsmittel, z.B. Kohlenwasserstoffe, CO, $H_2$, wird in den Kathodenraum eingeleitet. Als Katalysator kann insbesondere ein Dreiwegekatalysator oder ein NO-Spaltkatalysator eingesetzt werden. Der Katalysator kann auf der Kathode 3 angeordnet oder dem Kathodenraum nachgeschaltet sein. Das Reduktionsmittel kann an Bord des Kraftfahrzeugs erzeugt werden oder in einem Tank mitgeführt werden.

Die Reduktion des NO auf der Kathodenseite mit dem gasförmigen Reduktionsmittel kann durch die Abwesenheit des Sauerstoffs hochselektiv durchgeführt werden. Dadurch werden höhere NO-Umsätze bei gleichzeitig verringertem Reduktionsmittelbedarf erzielt.

Fig. 5 zeigt Fall D als weitere Ausführung der Erfindung, bei der das kathodenseitig vorliegende NO durch katalytische Reduktion mit $H_2$ umgesetzt wird. Der Festelektrolyt 2, z.B. beta-$Al_2O_3$, kann neben den $NO^+$-Ionen auch $H^+$-Ionen transportieren. Die Kathode 3 ist ist mit einem an sich bekannten DENOX-Katalysator beschichtet. Bei dem dargestellten Aufbau treten neben den $NO^+$-Ionen auch $H^+$-Ionen durch den Festelektrolyten 2 hindurch. Die $H^+$-Ionen stammen von dem im Motorabgas vorhandenen Wasser nach der Reaktion:

$$2\ H_2O \longrightarrow O_2 + 4H^+ + 4e^-.$$

Die $H^+$-Ionen werden an der Kathode gemäß der Reaktion

$$2H^+ + 2e^- \longrightarrow H_2$$

zu $N_2$ reduziert. Am DENOX-Katalysator an der Kathode 3 erfolgt die Reaktion

$$NO + H_2 \longrightarrow N_2 + H_2O.$$

Neben der beschriebenen Ausführung, bei der sowohl $NO^+$ als auch $H^+$-Ionen durch den Festelektrolyten 2 transportiert werden, ist auch eine alternative Anordnung möglich, bei der neben einem $NO^+$-leitenden Festelektrolyten zusätzlich ein weiterer, $H^+$-Ionen leitender Festelektrolyt vorhanden ist, z.B. eine PEM (Proton Exchange Membran).

Die Reduktion des NO mit gleichzeitig an der Kathode generiertem Wasserstoff kann durch die Abwesenheit von Sauerstoff hochselektiv durchgeführt werden.

Ein weiterer Vorteil ist in der im Verfahren enthaltenen on-board-Erzeugung des Wasserstoffs zu sehen. Wasserstoff verfügt über ein hohes Reduktionspotential.

Fig. 6 schließlich zeigt eine Ausführung (Fall E), bei der das kathodenseitig vorliegende NO katalytisch zu $N_2$ und $O^{2-}$ reduziert wird, wobei die $O^{2-}$-Ionen anschließend durch einen $O^{2-}$-leitenden Festelektrolyten 4, weitergeleitet werden. Im einzelnen ergibt sich folgender Aufbau: Wie bei den vorhergehenden Ausführungsbeispielen sind Anode 1, $NO^+$-Ionen-leitender Festelektrolyt 2, z.B. $NO^+$-ausgetauschtes $Al_2O_3$ sowie Kathode 3 vorhanden. Die Kathode 3 ist mit einem NO-Spaltkatalysator beschichtet, an dem das kathodenseitige NO nach der Reaktion

$$2\ NO \longrightarrow N_2 + 2\ O\ (ad)$$

$$O\ (ad) + 2e^- \longrightarrow O^{2-}$$

gespalten wird.

Zusätzlich zu den bisher beschriebenen Elementen ist eine weitere, anodisch geschaltete Elektrode 5 vorhanden, wobei zwischen dieser weiteren Elektrode 5 und der Kathode 3 eine Spannungsdifferenz besteht. Zwischen Elektrode 3 und der weiteren Elektrode 5 ist ein $O^{2-}$-leitender Festelektrolyt 4, z.B. Zirkondioxid angeordnet. Der an der Kathode 3 entstehende Spaltsauerstoff $O^{2-}$ wird durch den $O^{2-}$-leitender Festelektrolyt 4 hindurch an die weitere Elektrode 5 transportiert, dort entladen und als $O_2$-Moleküle abgegeben:

$$O^{2-} \longrightarrow O(ad) + 2e^-$$

$$2\ O\ (ad) \longrightarrow O_2\ (g)$$

mit (g): gasförmig.

Bei der beschriebenen Verfahrensvariante kann auf den Einsatz eines Reduktionsmittels vollständig verzichtet werden. Die eingesetzte elektrische Energie wird selektiv nur zum Transport des NO durch den Elektrolyten verwendet.

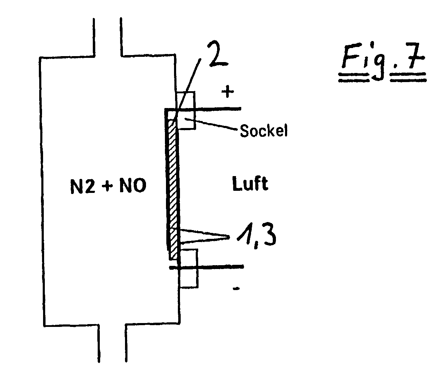

Fig. 7 zeigt einen Versuchsaufbau zur Durchführung des erfindungsgemäßen Verfahrens. An eine $Ag^+$-ausgetauschte beta-$Al_2O_3$-Membran 2 (Festelektrolyt), die einseitig NO-haltigem Gas ausgesetzt ist, wird über zwei Pt/Ruß-Elektroden 1,3 eine Spannung angelegt, die langsam gesteigert wird. Es fließt ein Strom, der mit der Spannung zunimmt. Bei Abschalten des NO-haltigem Gas geht der Strom trotz konstanter Spannung zurück. Damit ist der Stromfluß eindeutig auf die Umsetzung von NO zurückzuführen.

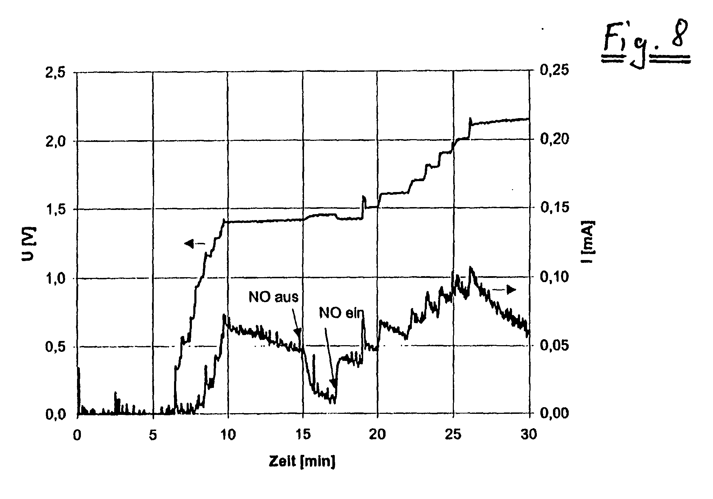

Fig. 8 zeigt die entsprechenden zeitlichen Verläufe von Spannung und Stromstärke.

**Patentansprüche**

1. Verfahren zur Entfernung von NO aus dem Abgas von Verbrennungsmotoren, wobei das NO-haltige Abgas an eine erste Elektrode (1) geleitet wird, an der das NO anodisch zu $NO^+$ oxidiert wird, das $NO^+$ anschließend durch einen $NO^+$ - leitenden Festelektrolyten (2), der sich an die erste Elektrode (1) anschließt, zu einer zweiten Elektrode (3) transportiert wird, an der das NO kathodisch reduziert wird, **dadurch gekennzeichnet, daß** das NO auf der Kathodenseite katalytisch untere Bildung von $N_2$ umgesetzt oder in den Motorbrennraum rückgeführt wird.

2. Verfahren nach Anspruch 1, **dadurch gekennzeichnet, daß** das auf der Kathodenseite vorliegende NO über die Ansaugluft in den Motorbrennraum geführt und dort umgesetzt wird.

3. Verfahren nach Anspruch 1, **dadurch gekennzeichnet, daß** das auf der Kathodenseite vorliegende NO unter stöchiometrischen oder fetten Abgasbedingungen an einem Dreiwegekatalysator umgesetzt wird.

4. Verfahren nach Anspruch 1, **dadurch gekennzeichnet, daß** das auf der Kathodenseite vorliegende NO mittels eines gasförmigem Reduktionsmittels katalytisch umgesetzt wird.

5. Verfahren nach Anspruch 1, **dadurch gekennzeichnet, daß** das auf der Kathodenseite vorliegende NO mit $H_2$ katalytisch reduziert wird, wobei der benötigte Wasserstoff aus dem abgasseitigem Wasser stammt, und durch den Festelektrolyten (2) oder durch eine zusätzliche $H^+$-leitende Membran auf die Kathodenseite transportiert wird.

6. Verfahren nach Anspruch 1, **dadurch gekennzeichnet, daß** das auf der Kathodenseite vorliegende NO katalytisch zu $N_2$ und $O^{2-}$ reduziert wird, wobei die $O^{2-}$-Ionen anschließend durch einen $O^{2-}$-leitenden Festelektrolyten (4), der sich an die zweite Elektrode (3) anschließt, weitergeleitet werden.

7. Verfahren nach einem der vorangehenden Ansprüche, **dadurch gekennzeichnet, daß** der Festelektrolyt ein mit $Ag^+$- oder $NO^+$-ausgetauschtes beta-Aluminiumoxid ist.

## Claims

1. Method for removing NO from the exhaust gas from internal combustion engines, in which the NO-containing exhaust gas is passed to a first electrode (1), at which the NO is anodically oxidized to form $NO^+$, the $NO^+$ then being carried through an $NO^+$-conducting solid electrolyte (2), which adjoins the first electrode (1), to a second electrode (3), at which the NO is cathodically reduced, **characterized in that** the NO on the cathode side is catalytically converted to form $N_2$ or is returned to the engine combustion chamber.

2. Method according to Claim 1, **characterized in that** the NO which is present on the cathode side is passed into the engine combustion chamber via the intake air and is converted in this combustion chamber.

3. Method according to Claim 1, **characterized in that** the NO which is present on the cathode side is converted at a three-way catalytic converter under stoichiometric or rich exhaust-gas conditions.

4. Method according to Claim 1, **characterized in that** the NO which is present on the cathode side is catalytically converted by means of a gaseous reducing agent.

5. Method according to Claim 1, **characterized in that** the NO which is present on the cathode side is catalytically reduced using $H_2$, the hydrogen required originating from the water on the exhaust gas side and being transported to the cathode side through the solid electrolyte (2) or through an additional $H^+$-conducting membrane.

6. Method according to Claim 1, **characterized in that** the NO which is present on the cathode side is catalytically reduced to form $N_2$ and $O^{2-}$, the $O^{2-}$ ions then being passed onward through an $O^2$-conducting solid electrolyte (4) which adjoins the second electrode (3).

7. Method according to one of the preceding claims, **characterized in that** the solid electrolyte is an Ag+- or NO+- exchanged beta-aluminium oxide.

## Revendications

1. Procédé pour éliminer du NO du gaz d'échappement de moteurs à combustion interne, le gaz d'échappement contenant du NO étant amené à une première électrode (1), sur laquelle le NO est oxydé anodiquement en $NO^+$, le $NO^+$ étant ensuite transporté à travers un électrolyte solide (2) conducteur de $NO^+$, lequel est contigu à la première électrode (1), jusqu'à une seconde électrode (3), sur laquelle le NO est réduit cathodiquement, **caractérisé en ce que** le NO est transformé catalytiquement du côté de la cathode par formation de $N_2$ ou renvoyé dans la chambre de combustion du moteur.

2. Procédé selon la revendication 1, **caractérisé en ce que** le NO présent du côté de la cathode est amené par l'air d'admission dans la chambre de combustion du moteur et y est transformé.

3. Procédé selon la revendication 1, **caractérisé en ce que** le NO présent du côté de la cathode est transformé dans des conditions de gaz d'échappement à mélange stoechiométrique ou riche dans un catalyseur à trois voies.

4. Procédé selon la revendication 1, **caractérisé en ce que** le NO présent du côté de la cathode est transformé catalytiquement au moyen d'un agent de réduction gazeux.

5. Procédé selon la revendication 1, **caractérisé en ce que** le NO présent du côté de la cathode est réduit catalytiquement avec du $H_2$, l'hydrogène nécessaire provenant de l'eau contenue dans le gaz d'échappement, et transporté à travers l'électrolyte solide (2) ou à travers une membrane supplémentaire conductrice de $H^+$ du côté de la cathode.

6. Procédé selon la revendication 1, **caractérisé en ce que** le NO présent du côté de la cathode est réduit catalytiquement en $N_2$ et $O^{2-}$, les ions $O^{2-}$ étant ensuite amenés plus loin à travers un électrolyte solide (4) conducteur d'$O^{2-}$, lequel est contigu à la seconde électrode (3).

7. Procédé selon l'une quelconque des revendications qui précèdent, **caractérisé en ce que** l'électrolyte solide est un oxyde d'aluminium bêta ayant fait l'objet d'échange avec de l'$Ag^+$ ou du $NO^+$.

EP 0 868 938 B1

Kationenleiter:
z.B. $NO^+$-$Al_2O_3$

Kathodenreaktionen:
$NO^+ + e^- ---> NO$

Anodenreaktionen:
$N\,O ---> NO^+ + e^-$

$Fig.\,1$

2

1

Kathodenraum

$NO^+$

3

Anodenraum
(abgasdurchströmt)

Abgas

−    +

Fig. 2

Kathoden-raum

Anoden-raum

NO⁺

Abgas

Motor

Ansaugluft

$$\underline{\underline{Fig.3}}$$

Dreiwege-katalysator

2

3

1

Kathoden-raum

NO⁺

Anoden-raum

$\lambda < 1$
$\lambda = 1$

Mager-Betrieb

− +

Abgasklappe

Motor

Abgas (NO-frei)

Fig. 4

Abgas (NO-haltig)

Motor

Anodenraum

NO$^+$

Kathodenraum

Reduktionsmittel
(gasförmig)

Dreiwegekatalysator
oder NO-Spaltkatalysator

nachgeschaltet oder
auf Elektrode integriert

1
2
3

+
−

Fig. 5

Fig. 6

**Kathode +**
**NO-Spaltkatalysator:**
$NO^+ + e^- \longrightarrow NO$
$2\,NO \longrightarrow N_2 + 2\,O(ad)$
$O(ad) + 2\,e^- \longrightarrow O^{2-}$

**Kationenleiter**
z.B. $NO^+$-$Al_2O_3$

**Abgas (NO-frei)**

$O_2$  $N_2$

**O$^{2-}$-Ionenleiter:**
z.B. $ZrO_2$

5    4    3  2    1

Anodenraum 2

$O^{2-}$   $NO^+$

Anodenraum 1

**Anodenreaktion I:**
$NO \longrightarrow NO^+ + e^-$

**Anodenreaktion II:**
$O^{2-} \longrightarrow O(ad) + 2\,e^-$
$2\,O(ad) \longrightarrow O_2\,(g)$

+  −    −  +

**Abgas (NO-haltig)**

*Motor*

EP 0 868 938 B1

N2 + NO

Luft

2

+

Sockel

1,3

-

*Fig. 7*

EP 0 868 938 B1

EP 0 868 938 B1

Fig. 8